# EUROPÄISCHE PATENTANMELDUNG

(11) **EP 1 445 246 A2**
(43) Veröffentlichungstag der Anmeldung: **11.08.2004**
(21) Anmeldenummer: 04001746.9
(22) Anmeldetag: 28.01.2004
(51) Int. Cl.: C07B 43/02

(54) **Verfahren zur Überwachung und Führung von Nitrierprozessen mit Hilfe von Online-Spektrometern**

(30) Priorität: 05.02.2003 DE 10304615
(71) Anmelder: Bayer Aktiengesellschaft, 51368 Leverkusen (DE)
(72) Erfinder: Riehle, Claus, Dr., 51519 Odenthal (DE); Brand, Marcus, 41539 Dormagen (DE); Hilgers, Frank, 41541 Dormagen (DE); Jäger, Klaus, Dr., 51375 Leverkusen (DE); Giesen, Rainer, 47809 Krefeld (DE); Hamacher, Heinz-Josef, 50181 Bedburg (DE); Wolf, Udo, Dr., 47906 Kempen (DE)

(57) **Zusammenfassung**

Die Erfindung betrifft ein Verfahren zur Überwachung und/oder Führung von Nitrierprozessen mit folgenden Schritten:
- Inline-Messung von Infrarot-, vorzugsweise Nahinfrarot-Spektren hinter der jerweiligen Nitrierstufe,
- Auswertung der gemessenen Spektren mittels eines Rechner gestützten, Matrix spezifischen Kalibrationmodells zur Bestimmung des Salpetersäuregehalts,
- Übertragung der Ergebnisse der spektrometrischen Untersuchung an ein Prozessleitsystem,
- Eingabe der Ergebnisse der spektrometrischen Untersuchung zur Angabe des Salpetersäuregehalts in der Säurephase in einen Regler (224) für die Steuerung der Dosierung (207, 217) der Salpetersäure in einen Nitrierreaktor.

## Beschreibung

Die vorliegende Erfindung betrifft ein Verfahren zur Überwachung und zur Führung von Nitrierprozessen, insbesondere zur Nitrierung von Toluol, mit Hilfe eines rechnergestützten, Matrix spezifischen Kalibrationsmodells und eines Prozessmodells.

Aus dem Stand der Technik sind verschiedene Nitrierungsverfahren bekannt. Beispielsweise wird Toluol mit Salpetersäure zu Nitrotoluidinen als Farbzwischenprodukte nitriert. Ferner ist die Nitrierung von Toluol mit Mischsäuren zu Nitrotoluol und Dinitrotoluol bekannt. Beispielsweise wird Dinitrotoluol zu Diaminen, Diisocyanaten, Trinitrotoluol oder Phloroglucin weiterverarbeitet.

Aus wirtschaftlichen Gründen besteht bei der Nitrierung das Ziel, die Nitrierung mit einem möglichst geringen Säureüberschuss zu betreiben. Hierzu ist es aus dem Stand der Technik bekannt, manuell Proben aus dem Prozess zu entnehmen und im Labor analytisch zu untersuchen. Der Prozess wird dann bei Bedarf manuell nachgeregelt.

Nachteilig ist hierbei der hohe Personalaufwand für die Probenentnahme und die Laboranalytik. Ein weiterer Nachteil ist, dass der Aufwand linear mit der Anzahl der Messstellen wächst. Ferner ist die manuelle Probenentnahme unter dem Gesichtspunkt der Arbeitssicherheit problematisch, da es sich insbesondere bei 2-Nitrotoluol um einen gesundheitsschädlichen Arbeitsstoff handelt. Deshalb ist bei der Handhabung von 2-Nitrotoluol vorsorglich stets das Tragen von Atemschutz vorgeschrieben.

Ein weiterer Nachteil der manuellen Probenentnahme mit nachfolgender Laboranalytik ist, dass die Nachregelung des Prozesses nur in relativ großen Zeitabständen und unregelmäßig erfolgen kann. Dies kann einen relativ großen Säureüberschuss zur Folge haben; die Anlage kann dann nicht technisch und wirtschaftlich optimal betrieben werden.

Der Erfindung liegt daher die Aufgabe zugrunde, ein verbessertes Verfahren zur Überwachung und Führung von Nitrierprozessen zu schaffen, welches eine Verringerung des Säure-überschusses ermöglicht. Der Erfindung liegt ferner die Aufgabe zugrunde, eine Online-Messmethode mit einem rechnergestützten Prozessmodell und eine entsprechende Anlage zur Nitrierung zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird die Säurephase nach der Nitrierung online spektrometrisch untersucht. Vorzugsweise erfolgt dies durch Infrarot-Spektrometrie. Solche Messungen werden auch als Infrarot-Spektroskopie bezeichnet. Entsprechende IR-Spektrometer, insbesondere für den nahen Infrarotbereich (NIR) sind kommerziell erhältlich, z. B. von Polytec GmbH, und anderen Herstellern.

Nach einer bevorzugten Ausführungsform der Erfindung wird mittels eines NIR-Spektrometers und eines geeigneten Rechner gestützten Kalibrationsmodells der Salpetersäuregehalt online in der Säurephase nach der Nitrierung bestimmt. Von dem NIR-Spektrometer werden dann z. B. über einen Feldbus Daten zur Angabe des Salpetersäuregehalts an das Prozessleitsystems übertragen. Aufgrund des in der Säurephase nach der Nitrierung festgestellten Salpetersäuregehalts ist eine Regelung durch das Prozessleitsystem für die Zuführung von Salpetersäure möglich. Aus der US 5,121,337 und der EP-0 094 876 B1 ist an sich die online Steuerung einer Produktionsanlage zur Regelung verschiedener Polymerisationsparamter bekannt geworden, wobei ein auf der Basis von gemessenen Spektren erstelltes prädiktives Modell eingesetzt wird.

Nach einer bevorzugten Ausführungsform der Erfindung wird das gemessene NIR-Spektrum mit Hilfe eines Matrix spezifischen Kalibrationsmodells ausgewertet. Die stoffliche Matrix ist durch den Nitirierprozess vorgegeben und von den Prozessparametem abhängig. Mit Hilfe von chemometrischen Methoden werden die gemessenen Spektren zu den Ergebnissen aus Laboruntersuchungen referenziert.

Dies erfolgt in der Weise, dass die gleiche Probe, an der online ein NIR-Spektrum bestimmt wurde, im Labor mit Hilfe von Titrationsmessungen analysiert wird. Durch die Untersuchung und den Vergleich von entsprechend vielen und entsprechend variierenden Proben gelingt es mit Hilfe der Chemometrie, ein Matrix spezifisches Kalibrationsmodell zu erstellen. Dieses Matrix spezifische Kalibrationsmodell ist auf einem Computer hinterlegt, der die Aufnahme des Spektrums steuert und das gemessene Spektrum mit Hilfe des Kalibrationsmodell online auswertet, so dass der Salpetersäuregehalt dem Prozessleitsystem online zur Verfügung steht.

Die Nitrierung von Toluol zum Di-Nitrotoluol (DNT) erfolgt zweistufig. Die spektrometrische Untersuchung der Säurephase erfolgt zumindest nach der zweiten Nitrierstufe, um die Zuführung von Salpetersäure zu der ersten und/oder der zweiten Nitrierstufe nachzuregeln.

Nach einer weiteren bevorzugten Ausführungsform der Erfindung ist das NIR-Spektrometer mit mehreren Messstellen verbunden. Das NIR-Spektrometer wird gemultiplext, um spektrometrische Messungen nacheinander an den verschiedenen Messstellen durchzuführen. Aufgrund dieses Multiplexbetriebs des NIR-Spektrometers wächst der Messaufwand degressiv mit der Anzahl der Messstellen.

Die Erfindung ist besonders vorteilhaft, da sie eine deutlich verbesserte Prozessführung ermöglicht. Insbesondere ermöglicht es die Erfindung die Produktionsanlage kontinuierlich nah am technischen und wirtschaftlichen Optimum zu betreiben. Ein weiterer Vorteil ist die Verbesserung der Arbeitssicherheit.

Im Weiteren werden bevorzugte Ausführungsformen der Erfindung mit Bezugnahme auf die Zeichnungen näher erläutert.

Es zeigen:
- Figur 1:: Ein Flussdiagramm für die verbesserte Überwachung und Führung von Nitrierprozessen durch die online-Messung der Säurephase und die verbesserte Salpetersäuredosierung
- Figur 2:: Ein Blockdiagramm einer Ausführungsform eines erfindungsgemäßen Verfahrens am Beispiel einer zweistufigen Nitrierung
- Figur 3:: Verschiedene NIR-Spektren für verschiedene Salpetersäurekonzentrationen.
- Figur 4:: Ein Flussdiagramm zur Erstellung des Matrix spezifischen Kalibrations-modells, seiner Validierung und Verbesserung.
- Figur 5:: Schematische Darstellung von Bypass mit Messzelle.

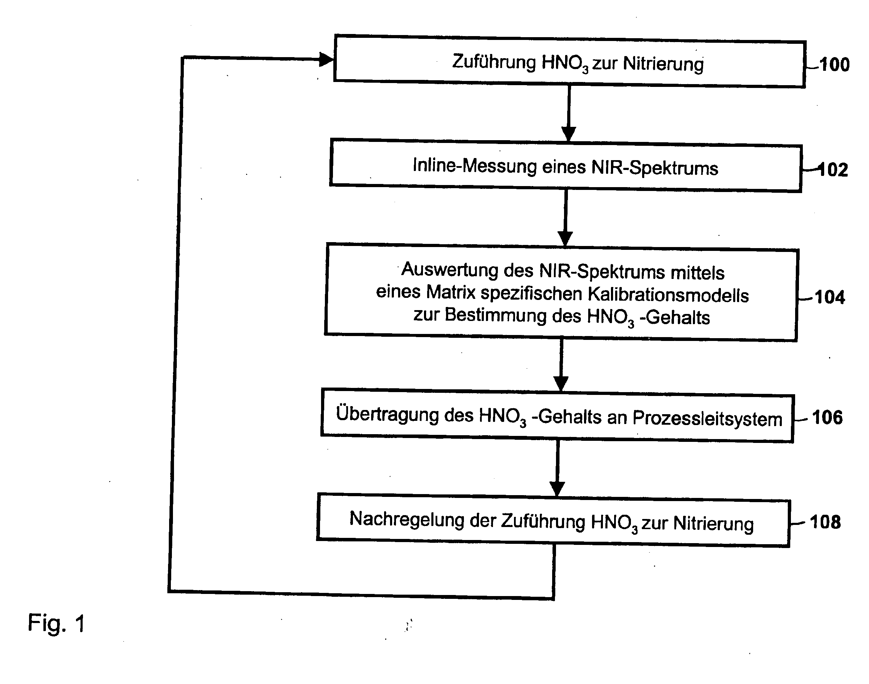

Die Figur 1 zeigt ein Flussdiagramm eines erfindungsgemäßen Verfahrens zur Überwachung und Führung von Nitrierprozessen. In dem Schritt 100 wird Salpetersäure (HNO₃) kontinuierlich einer Nitrierstufe zugeführt. Das Produkt der Nitrierstufe ist ein Zwei-Phasen-System aus nitrierter, organischer Phase und Säurephase. Für die Säurephase wird ein NIR-Spektrum mittels einer geeigneten Messzelle und eines NIR-Spektrometers aufgenommen. Dies erfolgt in dem Schritt 102. Im Schritt 104 wird durch die Auswertung des NIR-Spektrums mittels eines Matrix spezifischen Kalibrationsmodells der HNO₃-Gehalt in der Säurephase bestimmt. Diese Messung erfolgt vorzugsweise inline oder online, d. h. im laufenden Produktstrom.

In dem Schritt 106 wird der ermittelte HNO₃-Gehalt an ein Prozessleitsystem übertragen. In dem Schritt 108 wird die Menge von kontinuierlich zugeführtem HNO₃ manuell oder durch das Prozessleitsystem nachgeregelt, um den HNO₃-Gehalt in der Säurephase erforderlichenfalls zu reduzieren.

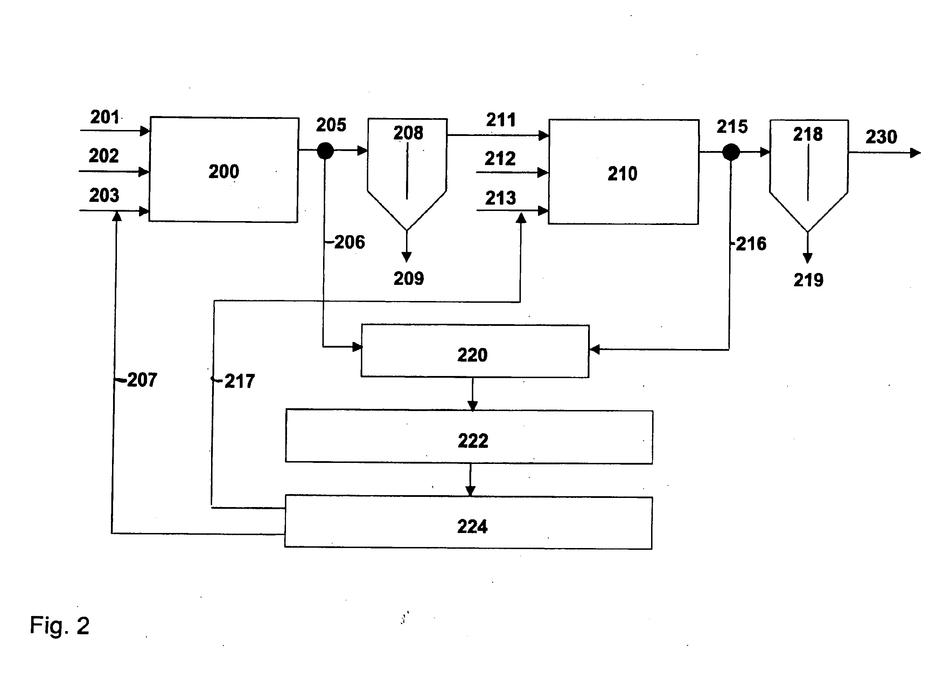

Die Figur 2 zeigt ein Blockdiagramm einer Ausführungsform einer entsprechenden Anlage. Die Anlage hat einen Reaktor 200 zur Realisierung einer ersten Nitrierstufe (Mononitrierung MNT). Die Einsatzstoffe sind Toluol 201, Schwefelsäure 202 und Salpetersäure 203. Das Produkt der ersten Nitrierstufe ist ein Zwei-Phasen-System, das im nachgeschalteten Abscheider 208 in die organische Phase 211 und die Säurephase 209 getrennt wird.

Hinter dem Reaktor 200 kann eine Messstelle 205 zur Aufnahme eines NIR-Spektrums der Säurephase vorgesehen sein. Hierzu kann ein NIR-Spektrometer 220 über einen Lichtwellenleiter 206 mit der Messstelle 205 verbunden sein.

Nach dem Abscheider 208 folgt ein weiterer Reaktor 210 zur Realisierung der zweiten Nitrierstufe (Dinitrierung DNT). Die Einsatzstoffe sind MNT 211, Schwefelsäure 212 und Salpetersäure 213. Das Produkt der zweiten Nitrierstufe ist ein Zwei-Phasen-System, das im nachgeschalteten Abscheider 218 in die organische Phase 230 und die Säurephase 219 getrennt wird.

Hinter dem Ausgang des Reaktors 210 ist vorzugsweise eine Messstelle 215 angeordnet. Das NIR-Spektrometer 220 ist über einen Lichtwellenleiter 216 mit der Messstelle 215 verbunden. Dadurch können NIR-Spektren für die Säurephase aufgenommen werden.

Die Messstellen 205 und 215 können jeweils mit einem eigenen Spektrometer bedient werden; vorzugsweise werden sie jedoch mit einem einzigen Spektrometer 220 bedient, das zwischen den Messtellen 205 und 215 umschaltet.

Das NIR-Spektrometer 220 gibt die gemessenen NIR-Spektren zur Auswertung mittels des Matrix spezifischen, Rechner gestützten Kalibrationsmodells 222 weiter. Der Rechner mit dem Matrix spezifischen Kalibrationsmodell 222 gibt seine Ergebnisse für den Salpetersäuregehalt an das Prozessleitsystem 224 weiter. Die nachfolgende Regelung (manuell oder automatisiert) der Dosierung 207 bzw. 217 der ersten 200 und/oder der zweiten 210 Nitrierstufe erlaubt eine verbesserte Prozessüberwachung und eine verbesserte Prozessführung für den Gehalt an HNO₃ in der Säurephase im Bereich von 0 bis 5%, insbesondere nahe 0 %, vorzugsweise im Bereich vom 0 % bis 0.3%.

Nach einer bevorzugten Ausführungsform der Erfindung wird der HNO₃-Gehalt lediglich an der Messstelle 215 bestimmt, nicht aber an der Messstelle 205. Die Messung des HNO₃-Gehalts an der Messstelle 215 nach der zweiten Nitrierstufe ist für die Regelung der Dinitrotoluolherstellung im Allgemeinen ausreichend.

Für den Fall, dass die Herstellung des Dinitrotoluols mehrstraßig erfolgt, können mehrere parallele Messstellen 215 vorgesehen sein. Sämtliche Messstellen 215 sind dann vorzugsweise mit demselben NIR-Spektrometer 220 verbunden, welches im Multiplexbetrieb arbeitet. Das NIR-Spektrometer 220 misst also die Spektren an den Messstellen 215 nacheinander in zyklischer Reihenfolge. Durch das Multiplexing des NIR-Spektrometers 220 lässt sich der Instrumentierungsaufwand für die Durchführung der HNO₃-Messungen optimieren.

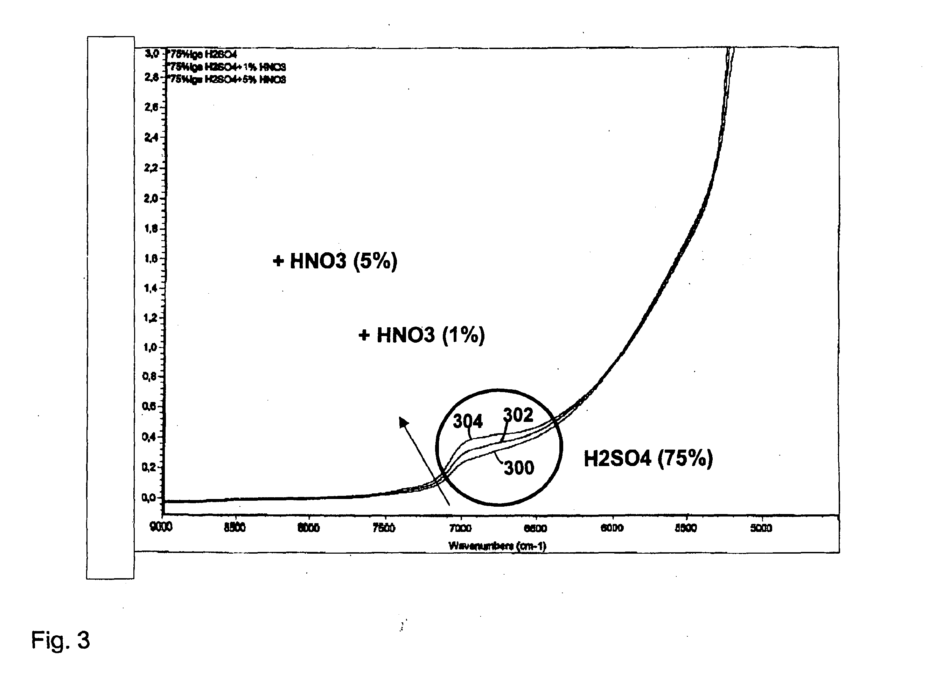

Die Figur 3 zeigt die Spektren 300, 302 und 304. Das Spektrum 300 ist für 75-%ige Schwefelsäure ohne Salpetersäureanteil aufgenommen worden. Das Spektrum 302 ist für 75-%ige Schwefelsäure mit 1 % Salpetersäureanteil aufgenommen worden. Das Spektrum 304 ist für 75-%ige Schwefelsäure mit 5 % Salpetersäureanteil aufgenommen worden.

Die gemessenen NIR-Spektren 300, 302 und 304 unterscheiden sich also deutlich in Abhängigkeit von dem prozentualen Salpetersäureanteil in der Säurephase. Entsprechend lässt sich der Salpetersäureanteil in der Säurephase durch Messung des NIR-Spektrums bestimmen. Vorzugsweise wird hierzu ein Matrix spezifisches Kalibrationsmodell benutzt, das auf vergleichenden Titrationsmessungen basiert.

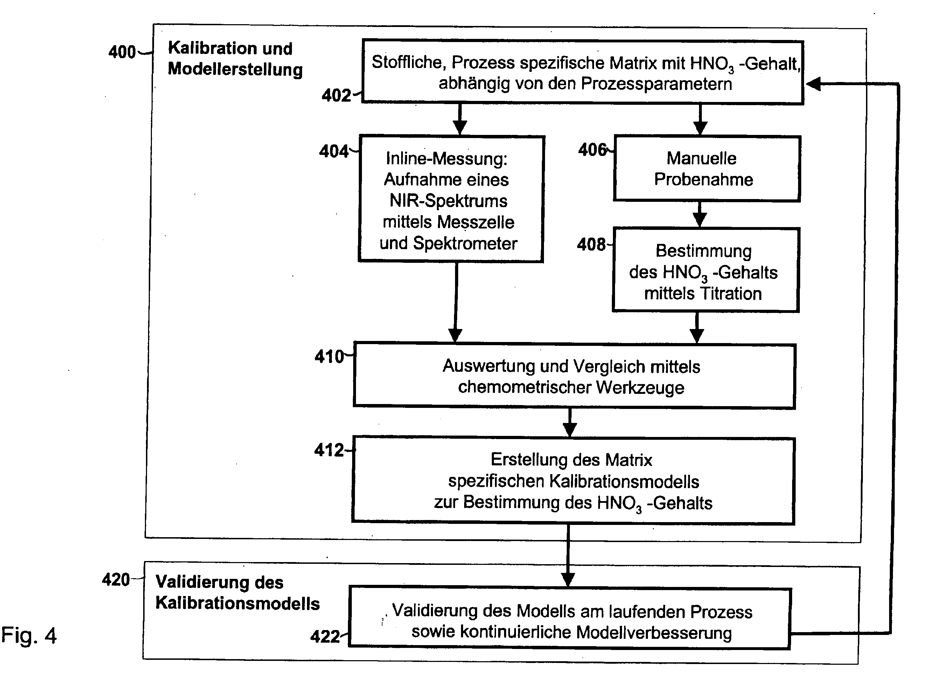

Die Figur 4 veranschaulicht das Vorgehen zur Gewinnung einer Datenbasis für die Erzeugung eines Matrix spezifischen Kalibrationsmodells. Der Schritt 400 illustriert die Erstellung eines solchen Kalibrationsmodells, der Schritt 420 die Valdierung dieses Modells.

Der Schritt 402 stellt die stoffliche Matrix dar, die Prozess spezifisch und in ihrer speziellen Zusammensetzung von den Prozessparametern abhängig ist.

Für die Erstellung des Kalibrationsmodells wird der Salpertersäuregehalt benutzt, der mittels einer manuellen Probenentnahme 406 mit anschließender Titration 408 ermittelt wird. Probenahme und Titration können auch automatisiert und online oder manuell und offline erfolgen. Parallel dazu ist im Prozessstrom eine Messzelle installiert, mit der die zu den Proben gehörenden NIR-Spektren aufgenommen werden können. Dies erfolgt in dem Schritt 404.

Im Schritt 410 werden die Ergebnisse aus den Titrationsbestimmungen mit den jeweiligen NIR-Spektren mit Hilfe chemömetrischer Methoden verglichen und korreliert.

Im Schritt 412 werden sämtliche Vergleiche zwischen allen NIR-Spektren und Titrationsergebnissen zusammengefasst und in einem Modell korreliert. Die Modellparameter werden so angepasst und eingestellt, dass der Salpetersäuregehalt für das vorliegende Stoffsystem und die vorliegenden Prozessparameter bestmöglich wiedergegeben werden. Ist das Modell angepasst und optimiert, liegt am Ende von Schritt 412 das Matrix spezifische Kalibrationsmodell vor.

Anschließend erfolgt im Schritt 420 die Validierung des Modells am laufenden Prozess. Immer dann wenn zeitlich passend zu den Spektren aus dem Prozess Titrationsergebnisse vorliegen, können diese entsprechend dem Schritt 400 zur sukzessiven Modellverbesserung eingebunden werden (Schritt 422).

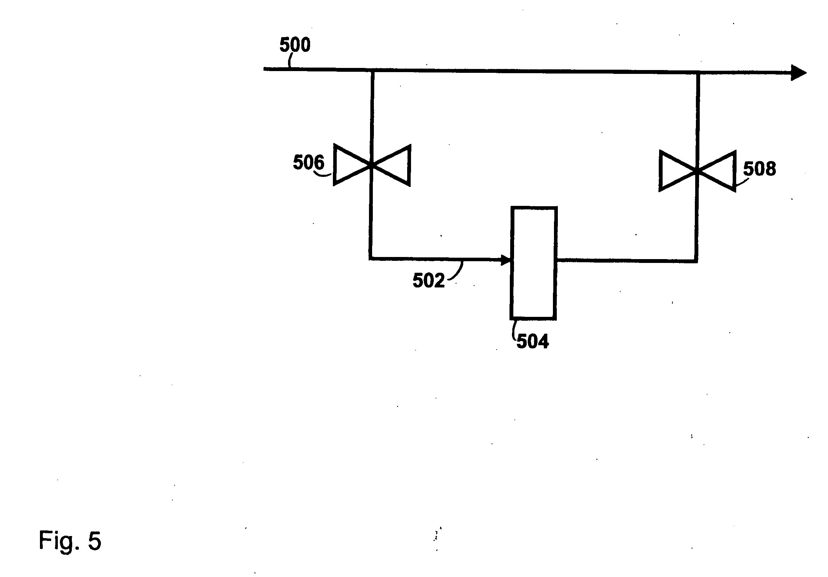

Die Figur 5 zeigt eine Ausführungsform zur Realisierung einer Messstelle (vgl. zum Beispiel Messstelle 215 der Figur 2). Durch die Leitung 500 fließt der Produktstrom der laufenden Herstellung. An der Leitung 500 befindet sich ein Bypass 502. Der Bypass 502 hat eine Messzelle 504. In Fließrichtung vor und hinter der Messzelle 504 befindet sich jeweils ein Absperrorgan 506 und 508 Die Absperrorgane ermöglichen den Zugang zur Messzelle bei laufendem Prozessstrom.

### Bezugszeichenliste

- Reaktor: 200
- Toluol: 201
- Schwefelsäure: 202
- Salpetersäure: 203
- Messstelle: 205
- Lichtwellenleiter: 206
- Regelung Dosierung: 207
- Abscheider: 208
- Säurephase: 209
- Reaktor: 210
- Mononitrotoluol (MNT): 211
- Schwefelsäure: 212
- Salpetersäure: 213
- Messstelle: 215
- Lichtwellenleiter: 216
- Regelung Dosierung: 217
- Abscheider: 218
- Säurephase: 219
- NIR-Spektrometer: 220
- Kalibrationsmodell: 222
- Prozessleitsystem: 224
- organische Phase: 230
- Spektrum: 300
- Spektrum: 302
- Spektrum: 304
- Leitung: 500
- Bypass: 502
- Messzelle: 504
- Absperrorgan: 506
- Absperrorgan: 508

## Patentansprüche

1. Verfahren zur Überwachung und/oder Führung zumindest eines Nitrierprozesses mit folgenden Schritten:
- spektrometrische Online-Messung der Zusammensetzung der Säurephase nach der Nitrierung,
- Eingabe von Daten zur Angabe der Zusammensetzung der Säurephase in ein Prozessleitsystem zur Prozessüberwachung und/oder Prozessführung.

2. Verfahren nach Anspruch 1, wobei die spektrometrische Untersuchung als infrarotspektrometrische Untersuchung, bevorzugt nahes infrarot (NIR), durchgeführt wird.

3. Verfahren nach Anspruch 1 oder 2, wobei zur Durchführung der spektrometrischen Untersuchung ein Bypass verwendet wird, in dem sich eine Messzelle für die spektrometrische Untersuchung befindet.

4. Verfahren nach einem der vorhergehenden Ansprüche 1, 2 oder 3, wobei die Daten auf der spektrometrischen Online-Messung und der Auswertung mit Hilfe eines Matrix spezifischen Kalibrationsmodells basieren.

5. Verfahren nach Anspruch 4, wobei ein mittels der spektrometrischen Online-Messung erhaltenes Spektrum mit Hilfe des Matrix spezifischen Kalibrafronsmodells ausgewertet wird, das auf vergleichenden Titrationsmessungen basiert.

6. Verfahren nach einem der vorhergehenden Ansprüche 1 bis 5, mit einer ersten Zuführung von Salpetersäure zur Monotrierung und einer zweiten Zuführung von Salpetersäure zur Dinitrierung, wobei die spektrometrische Untersuchung nach der Mono- und/oder der Di-Nitrierung erfolgt.

7. Verfahren nach einem der vorhergehenden Ansprüche 1 bis 6, wobei ein Infrarot-Spektrometer, bevorzugt NIR-Spektrometer, mit mehreren Messstellen zur Durchführung der spektrometrischen Untersuchung verbunden ist, und das Spektrometer im Multiplexbetrieb zur Durchführung der spektrometrischen Untersuchungen an mehreren Messstellen mehrerer Nitrierstraßen betrieben wird.

8. Computerprogrammprodukt, insbesondere digitales Speichermedium, mit computerlesbaren Mitteln zur Durchführung der folgenden Schritte:
- Auswertung der durch eine spektrometrische Untersuchung einer Säurephase nach einer Nitrierung gewonnenen Daten zur Bestimmung des Salpetersäuregehalts in der Säurephase,
- Eingabe des Salpetersäuregehalts in einen Regler für die Steuerung der Dosierung der Salpetersäure zur Nitrierung.

9. Computerprogrammprodukt nach Anspruch 8, mit einem matrixspezifischen Kalibrationsmodell zur Auswertung der durch die spektrometrische Untersuchung der Säurephase nach der Nitrierung gewonnenen Daten zur Bestimmung des Salpetersäuregehalts in der Säurephase.

10. Computerprogrammprodukt nach Anspruch 8 oder 9, wobei die computerlesbaren Mittel für die automatisierte Regelung des Nitrierverfahrens ausgebildet sind.

11. Anlage zur Überwachung und / oder Führung von Nitrierprozessen mit
- Mitteln (205, 206, 215, 216, 220, 222;502, 504, 506, 508) zur spektrometrischen Untersuchung der Säurephase nach einer Nitrierung,
- Regelungsmitteln (224) zur Regelung der Dosierung von Salpetersäure zu mindestens in einem Nitrierreaktor (200, 210), wobei die Regelungsmittel zur Regelung der Dosierung von Salpetersäure basierend auf einem Ergebnis der spektrometrischen Untersuchung ausgebildet sind.

12. Anlage nach Anspruch 11, wobei die Mittel zur spektrometrischen Untersuchung ein Infrarot-Spektrometer, bevorzugt NIR, (220,) aufweisen.

13. Anlage nach Anspruch 11 oder 12, mit einem Bypass (502) hinter dem zumindest einen Nitrierreaktor (200, 210), wobei sich in dem Bypass eine Messzelle (504) für die spektrometrische Untersuchung befindet.

14. Anlage nach einem der vorhergehenden Ansprüche 11 bis 13, mit Mitteln zur Messung eines Spektrums und Mitteln zur Auswertung der Messung mit Hilfe eines Matrix spezifischen Kalibrationsmodells, das auf vergleichenden Titrationsmessungen basiert.

15. Anlage nach einem der vorhergehenden Ansprüche 11 bis 14, wobei die Mittel zur spektrometrischen Untersuchung ein Infrarotspektrometer (220), bevorzugt ein NIR-Spektrometer, mit elektronischer Auswerteeinheit (222) aufweisen, und das Infrarotspektrometer mit mehreren Messstellen zur spektrometrischen Untersuchung der Säurephase nach einer Nitrierung verbunden ist und das Infrarot-Spektrometer für den Multiplexbetrieb ausgebildet ist.

16. Anlage nach einem der vorhergehenden Ansprüche 11 bis 15 mit einem Prozessleitsystem (240) zur Realisierung der Regelungsmittel und einer Verbindung der Mittel zur spektrometrischen Untersuchung mit dem Prozessleitsystem.
